# EUROPEAN PATENT SPECIFICATION

(11) **EP 2 956 688 B1**
(45) Date of publication and mention of the grant of the patent: **09.08.2017**
(21) Application number: 13824587.3
(22) Date of filing: 11.12.2013
(51) Int. Cl.: F16G 5/16

(54) **DRIVE BELT COMPRISING DIFFERENT TYPES OF TRANSVERSE MEMBERS FOR A CONTINUOUSLY VARIABLE TRANSMISSION AND CONTINUOUSLY VARIABLE TRANSMISSION EQUIPPED THEREWITH**
ANTRIEBSRIEMEN AUS VERSCHIEDENEN TYPEN VON TRAVERSENELEMENTEN FÜR EIN STUFENLOSES GETRIEBE UND STUFENLOSES GETRIEBE DAMIT
COURROIE D'ENTRAÎNEMENT COMPRENANT DIFFÉRENTS TYPES D'ÉLÉMENTS TRANSVERSAUX POUR UNE TRANSMISSION À VARIATION CONTINUE, ET TRANSMISSION À VARIATION CONTINUE ÉQUIPÉE DE CETTE COURROIE

(30) Priority: 12.12.2012 NL 1039950
(43) Date of publication of application: 23.12.2015
(73) Proprietor: Robert Bosch GmbH, 70442 Stuttgart (DE)
(72) Inventor: VAN DER NOLL, Erik, 3315MB Dordrecht (NL)
(74) Representative: Plevier, Gabriel Anton Johan Maria
(86) International application number: PCT/EP2013/076245
(87) International publication number: WO 2014/090882

(56) References cited:
- JP-A- 2002 303 354

## Description

The present disclosure relates to a drive belt for a continuously variable transmission, which drive belt is, in particular, destined to be arranged around two pulleys of the transmission and which comprises a plurality of discrete transverse members for contacting the pulleys, as well as one or more endless, i.e. ring shaped, carriers for carrying and guiding the transverse members in the transmission. This type of drive belt is also known as a push belt.

The endless carrier of the drive belt is typically composed of a plurality of mutually nested, continuous flexible metal bands and is also known as a ring set. The endless carrier is at least partly inserted in a recess provided in the transverse members. In case the drive belt comprises only one endless carrier, such carrier is typically mounted in a central recess of the transverse members that opens towards the radial outside of the drive belt. However, usually the drive belt is provided with at least two endless carriers that are each mounted in a respective one of two recesses of the transverse members, which recesses then open towards a respective axial or lateral side of the transverse members, i.e. of the drive belt.

The transverse members of the drive belt are slidingly arranged along the circumference of the endless carrier or carriers in a virtually continuous row, such that these members are able to transmit forces which are related to a movement of the drive belt. The transverse members have two main body surfaces that, at least partly, extend substantially parallel with respect to each other and that are separated from each other over the (local) thickness of the transverse member by a circumferential side surface thereof. As seen along the circumference of the carrier, the transverse members have a comparatively small dimension, i.e. thickness, such that a several hundred thereof are present in the drive belt. Adjoining transverse members must be able to tilt relative to one another, in order for the belt to follow a curved trajectory (part). To accommodate and control such relative tilting, at least one of the two main body surfaces of two adjoining transverse members in the drive belt that are mutually in contact is provided with a so-called rocking edge in the form of an axially extending, convexly rounded section of a respective main body surface.

Parts of the side surface of the transverse members, which parts are predominantly oriented in the axial direction, i.e. widthwise, are corrugated and are intended for frictionally engaging the pulleys, in particular by being clamped widthwise between two conical sheaves thereof. These pulley sheave engaging parts of the side surface of the transverse members are denoted the contact faces. The friction contact between the contact faces of the transverse members and the pulley sheaves allows a force to be transmitted there between, such that the drive belt can transfer a drive torque and a rotational movement from one pulley to the other. In order for the drive belt to be in such frictional, force transmitting contact with the pulley sheaves and, at the same time, to be displaced in the radial direction relative to these sheaves, the said contact faces of the transverse members thereof are angled towards each other in radial inward direction. The angle defined between the contact faces of the transverse members is denoted the belt's contact angle which contact angle closely matches the angle defined between the cone faces of the sheaves of the pulleys, which latter angle is denoted the pulley angle.

It is a well known phenomenon that during operation of the continuously variable transmission, as the drive belt and the pulleys rotate, sound is generated by the transverse members successively and rhythmically impacting on the pulley sheaves. Although such sound does not interfere with the proper operation of the transmission, it can be perceived as annoying by the (vehicle) operator, in particular when noise level of other sources, such as vehicle engine, (meshing) gears or (rolling) wheels are low. It is therefore a general development aim in the design of a continuously variable transmission, and in particular of the drive belt that is applied therein, to minimize the noise that is generated thereby during operation, at least in terms of the audibility thereof to humans.

An obvious measure to reduce the above-described impact noise during operation of the transmission is to reduce the force of the impact of the transverse members with the pulley sheaves by reducing the mass of the transverse members. As an alternative measure it is has been proposed by the European patent publication EP-A-0 305 023 to provide the drive belt with two or more types of transverse members of mutually different thickness that are mixed amongst each other along the circumference of the belt. Hereby, the transverse members successively impact on the pulleys at different intervals during transmission operation, whereby the impact noise is attenuated by being dispersed over two (or more) frequencies. However, the effect of and/or attainable with this latter measure is limited, because the difference in thickness between the different types of transverse members is limited for both functional and manufacturing reasons. For example, the smoothness of operation of the transmission is best for the thinnest transverse members, moreover the contact stress introduced by a transverse member in the ring set is least for the thinnest transverse members.

The present disclosure is aimed at providing a novel measure to reduce the impact noise generated during operation, which novel measure can preferably be applied in addition to one or more of the known measures. The continuously variable transmission according to claim 1 hereinafter includes such novel measure and, as such, favorably produces less noise during operation in comparison with an otherwise comparable transmission that does not incorporate such measure.

In particular, by providing a first type of the transverse members with a contact angle that is equal to or smaller than the pulley angle and by providing a second type of the transverse members with a contact angle that is equal to or larger than the pulley angle, while these two transverse member types are provided with mutually different contact angles, the contact with the pulley sheaves occurs at mutually different radial positions between the said two transverse member types and thus also at mutually different speeds relative to the pulley sheaves. By this (relative) speed difference the impact noise is attenuated by being dispersed over two frequencies. The working principle behind the present, novel measure is thus comparable to that of the drive belt incorporating two or more types of transverse members of mutually different thickness.

It is noted that the contact angle of the known drive belt already varies somewhat, as a result of the inaccuracies and tolerances occurring in manufacturing. For example, in the conventional drive belt and in case the pulley angle is 22.0 °, the contact angle may vary between the transverse members for 0.2 of a degree, e.g. 22.0°±0.2°, or, in statistical terms, the standard deviation of the contact angle of the transverse members is 0.07°. According to JP2002-303354 this naturally occurring aspect in manufacturing will attenuate the transmission noise relative to a transmission wherein such contact angle would be more narrowly controlled in manufacturing. In particular, according to JP2002-303354, the noise attenuating effect may be improved by increasing the allowed standard deviation in production of up 0.2 of a degree for the contact angle. However, this large standard deviation corresponds to, i.e. can only be achieved in a relatively inaccurate manufacturing process, which can be highly disadvantageous, because then also other product dimensions will be produced less accurately as a consequence. At least in practice, it will be difficult and costly to arrange and/or control the manufacturing process in such a manner that only the variation of the contact angle between the produced transverse members increases, whereas the other dimensions thereof are produced with unaltered accuracy, i.e. do remain within the applied tolerances.

The present, novel drive belt, instead, incorporates transverse members in two, (statistically) discernable groups. For example, in combination with the said pulley angle of 22.0°, the said first type of the transverse members may have the larger contact angle of 22.3°±0.2° and the said second type of the transverse members may have the smaller contact angle of 21.7°±0.2°.

Further it is noted that in the typical transmission and drive belt design, a total (circumference) length of the belt has a value in the range from 500 to 750 mm. The transverse members of such typical drive belt design are all provided with essentially the same width in the range between 24 and 30 mm, as measured at the rocking edge, with essentially the same thickness in the range between 1.4 mm and 2.0 mm thick, as likewise measured at the rocking edge, and with contact faces that extend for about 6 mm, as measured in the radial direction. In such typical drive belt design, a thickness difference of no more than 0.14 to 0.20 mm can, realistically, be achieved between the different types of transverse members incorporated in the drive belt for attenuating the impact noise. It can be calculated that with such approximate 10% thickness difference between the transverse members of the drive belt, the frequency of the impact thereof with the pulleys sheaves is theoretically dispersed over a range of about 200 Hz at most. However, when applying the present, novel measure, the points of initial contact of the transverse members with the pulley sheaves of the pulley are spaced about 6 mm apart in the radial direction of the pulley sheaves, i.e. are mutually separated by the height of the contact faces. It can be calculated that with this latter drive belt design, the frequency of the noise generated by the transverse members impacting with the pulley sheaves is theoretically dispersed over a range of about 800 Hz. Because the noise attenuating effect is directly related to the effectiveness of the dispersion of the impact frequency, the present, novel measure provides not only an alternative to the known measures, but also a considerably more effective one.

The novel drive belt design will now be explained in greater detail in the following description along one or more exemplary embodiments thereof and with reference to the attached drawing figures, whereof.
figure 1 provides a schematic perspective view of the continuously variable transmission with a drive belt running over two pulleys, which drive belt includes an endless carrier and a number of transverse members;
figure 2 shows a cross section of the known drive belt oriented in the circumference direction thereof;
figure 3 provides a width-wise oriented view of a transverse member of the known drive belt;
figure 4 provides three schematic representations of a transverse member of the of the drive belt that has arrived in initial contact with a pulley; and
figure 5 represents a graph wherein the noise generated by a three specific drive belt designs is represented by way of a highly schematized plot of the sound amplitude versus its frequency.

In the drawing figures equal reference signs indicate equal or similar structures and/or parts.

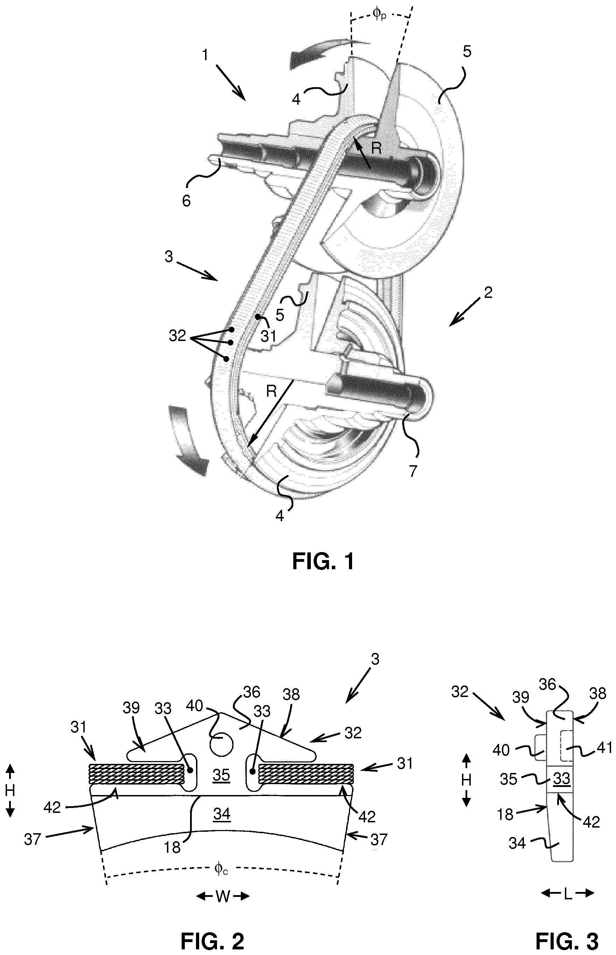

The schematic illustration of a continuously variable transmission in Figure 1 shows a drive belt 3 which runs over two pulleys 1, 2 and which includes a flexible endless carrier 31 and an essentially contiguous row of transverse members 32 that are mounted on and arranged along the circumference of the endless carrier 31. In the illustrated configuration of the transmission, the upper pulley 1 will rotate more quickly than the lower pulley 2. By changing the distance between the two conical sheaves 4, 5 of the pulleys 1, 2, the so-called running radius R of the drive belt 3 on each pulley 1, 2 can be changed in a mutually coordinated manner and, as a result, a (transmission) ratio between the rotational speeds of the two pulleys 1, 2 can be varied.

In Figure 2, the drive belt 3 is shown in a cross section thereof facing in the circumference or length direction L of the belt 3, i.e. facing in a direction perpendicular to the axial or width direction W and the radial or height direction H thereof. This figure 2 shows the presence of two endless carriers 31, which are shown in cross-section in this figure 2, that carry and guide the transverse members 32 of the drive belt 3, whereof one transverse member 32 is shown in front elevation in this figure 2.

The transverse members 32 and the endless carriers 31 of the drive belt 3 are typically made of metal, usually a steel alloy. The transverse members 32 take-up a clamping force exerted between the sheaves 4, 5 of each pulley 1, 2 via contact faces 37 thereof, one such contact face 37 being provided at each axial side of the transverse member 32. These contact faces 37 are mutually diverging in radial outward direction such that an acute angle is defined there between that is denoted the contact angle Φ_{C} of the drive belt 3, which contact angle essentially matches a V-angle defined between the sheaves 4, 5 of each pulley 1, 2, which latter angle is denoted the pulley angle Φ_{P}.

The transverse members 32 are able to move, i.e. to slide along the endless carriers 31 in the circumference direction L, so that a torque can be transmitted between the transmission pulleys 1, 2 by the transverse members 32 pressing against one another and pushing each other forward along the endless carriers 31 in a direction of rotation of the drive belt 3 and the pulleys 1, 2. In the exemplary embodiment that is illustrated in this figure 2, the endless carriers 31 are composed of five individual endless bands each, which endless bands are mutually concentrically nested to form the endless carrier 31. In practice, the endless carriers 31 often comprise more than five endless bands, e.g. nine or twelve or possible even more.

The transverse member 32 of the drive belt 3, which is also shown in a side elevation in Figure 3, is provided with two cut-outs 33 located opposite one another, which cut-outs 33 each open towards a respective axial side of the transverse member 32 and each accommodate a (small section) of a respective endless carriers 31. A first or base portion 34 of the transverse member 32 thus extends radially inwards from the endless carriers 31, a second or middle portion 35 of the transverse member 32 is situated in between the endless carriers 31 and a third or top portion 36 of the transverse member 32 extends radially outwards from the endless carriers 31. The radially inner side of each cut-out 33 is delimited by a so-called bearing surface 42 of the base portion 34 of the transverse member 32, which bearing surface 42 faces radially outwards, generally in the direction of the top portion 36 of the transverse member 32, and contacts the inside of an endless carrier 31.

A first or rear surface 38 of the two main body surfaces 38, 39 of transverse member 32 that face in mutually opposite circumference directions L, is essentially flat. The other or front main body surface 39 of the transverse member 32 is provided with a so-called rocking edge 18 that forms, in the radial direction H, the transition between an upper part of the front surface 39, extending essentially in parallel with its rear surface 38, and a lower part thereof that is slanted such that it extends towards the rear surface 38. In figure 2 the rocking edge 18 is indicated only schematically by way of a single line, however, in practice the rocking edge 18 is mostly provided in the shape of a convexly curved transition surface. The said upper part of the transverse member 32 is thus provided with an essentially constant dimension between the main body surfaces 38, 39, i.e. as seen in the circumference direction L, which dimension is typically referred to as the thickness of the transverse member 32.

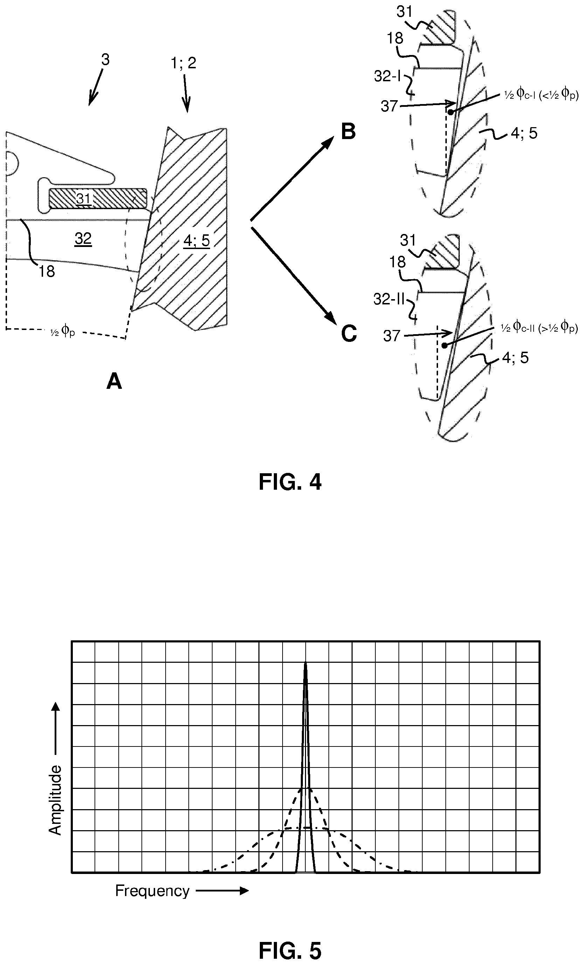

Based on these figures 1 to 3, it may be clear that during operation of the transmission 1, i.e. during the rotation of the pulleys 1, 2 and the drive belt 3 thereof, the transverse members 32 of the drive belt 3 successively impact with the sheaves 4, 5 of a pulley 1, 2 as these transverse members 32 arrive in friction contact with such pulley 1, 2. At a give rotational speed of the drive belt 3, such successive impacts occur at a regular interval and thus cause a noise at a specific, typically audible frequency. Figure 5 provides a schematized representation of such impact noise by means of a graph wherein the sound level, i.e. the amplitude, of the noise is plotted by the solid line in dependency on the frequency. The solid line in figure 5 shows that with the conventional belt the impact noise is concentrated at a single frequency with very little dispersion, which dispersion is due to product tolerances and other discontinuities of/in the overall system.

In an effort to reduce the amplitude of such impact noise, it has been proposed in the art to randomly incorporate transverse members 32 of different thickness in the drive belt 3, such that the successive impacts occur at different intervals. By this design measure, the impact noise is dispersed over a range of frequencies, as indicated (in schematized manner) by the dashed line in the graph of figure 5. By such dispersion, the amplitude of the impact noise is favorably reduced.

Presently, an alternative design measure is proposed for reducing the amplitude of the impact noise. In particular, it is proposed to incorporate two types of transverse members 32 in the drive belt 3, whereof a first type I defines a contact angle Φ_{C-I} that is smaller than the pulley angle Φ_{P} defined between the sheaves 4, 5 of at least one of the pulleys 1, 2, and whereof a second type II defines a contact angle Φ_{C-II} that is larger than such pulley angle Φ_{P}. As a result the transverse members 32 of the first type I first arrive in contact with the pulley sheaves 4, 5 of the at least one pulley 1; 2 at the bottom or radially inner end of the contact surfaces 37 thereof, whereas for the transverse members 32 of the second type II such first contact occurs at the top or radially outer end of the contact surfaces 37.

This latter, alternative design measure is illustrated in drawing figure 4, in particular in the parts B and C thereof. Both drawing parts B and C of figure 4 represent an enlargement of the area that is enclosed by the dashed ellipse in drawing part A of figure 4, with part B showing the said first type 32-I of the two types I, II of transverse members 32 incorporated in the drive belt 3 and with part C showing the said second type 32-II thereof. Like the known thickness variation of the transverse member 32, also this latter, contact angle variation has the effect of attenuating the impact noise by frequency dispersion. As indicated (in schematized manner) by the dashed-dotted line in the graph of figure 5, the impact noise frequency dispersion and amplitude reduction of the transverse member 32 contact angle variation can in practice be more effective than that of the transverse member 32 thickness variation.

It is noted that due to the forces applied between the pulleys 1, 2 and the drive belt 3 during operation and after the transverse members 32-I, 32-II have arrived in initial contact with the pulley sheaves 4, 5, these transverse member 32-I, 32-II slightly deform elastically to contact the pulley sheaves 4, 5 along the full height of contact surfaces 37, i.e. not only at the said top or bottom end thereof. This elastic deformation is intended and required, but also limits the maximum and minimum contact angle Φ_{C-I}, Φ_{C-II}, that can be applied relative to the pulley angle Φₚ in practice. It is presently considered that the contact angle Φ_{C-I}, Φ_{C-II} should be kept within one degree of the pulley angle Φₚ.

## Claims

1. Transmission with a pulley (1; 2) with two pulley sheaves (4, 5) that mutually define a pulley angle (Φp) and with a drive belt (3) with a ring-shaped carrier (31) and a number of transverse members (32) that are arranged slidingly and consecutively on the carrier (31) and that are each provided with a front surface (39) and with a rear surface (38), where between the transverse member (32) extends in thickness direction, and with contact surfaces (37) for arriving into friction contact with the pulley sheaves (4, 5) of pulley (1; 2) of the transmission and that are mutually oriented at a contact angle (Φc) of the drive belt (3) and where between the transverse member (32) extends widthwise, **characterized in that**, the contact angles (Φc-I, Φc-II) of the transverse members (32-I, 32-II) of the drive belt (3) can be grouped into two populations, with an average value of the contact angles (Φc-I; Φc-II) of the transverse members (32-I; 32-II) of one population being smaller than the pulley angle (Φp), with an average value of the contact angles (Φc-I; Φc-II) of the transverse members (32-I; 32-II) of the other one population being larger than the pulley angle (Φp) and with the difference between such average values of the contact angle (Φc-I; Φc-II) of the transverse members (32-I; 32-II) of the respective populations being equal to or larger than a difference between the contact angles (Φc-I, Φc-II) of all possible pairs of two transverse members (32-I, 32-II) of the said two populations separately.

2. Transmission with a pulley (1; 2) with two pulley sheaves (4, 5) that mutually define a pulley angle (Φp) and with a drive belt (3) with a ring-shaped carrier (31) and a number of transverse members (32) that are arranged slidingly and consecutively on the carrier (31) and that are each provided with a front surface (39) and with a rear surface (38), where between the transverse member (32) extends in thickness direction, and with contact surfaces (37) for arriving into friction contact with the pulley sheaves (4, 5) of pulley (1; 2) of the transmission and that are mutually oriented at a contact angle (Φc) of the drive belt (3) and where between the transverse member (32) extends widthwise, **characterized in that**, the contact angles (Φc-I, Φc-II) of the transverse members (32-I, 32-II) of the drive belt (3) can be grouped into two populations, with an average value of the contact angles (Φc-I; Φc-II) of the transverse members (32-I; 32-II) of one population being smaller than the pulley angle (Φp), with an average value of the contact angles (Φc-I; Φc-II) of the transverse members (32-I; 32-II) of the other one population being larger than the pulley angle (Φp) and with the standard deviation of the contact angles (Φc-I; Φc-II) of the transverse members (32-I; 32-II) within each population amounting to 0.07 or less.

3. Transmission according to claim 1 or 2, **characterized in that** the average value of the contact angles (Φc-I; Φc-II) of the transverse members (32-I; 32-II) of said one population is at least 0.2 of a degree smaller than the pulley angle (Φp) and **in that** the average value of the contact angles (Φc-I; Φc-II) of the transverse members (32-I; 32-II) of the said other one population is 0.2 of a degree larger than the pulley angle (Φp).

4. Transmission according to claim 1, 2 or 3, **characterized in that** the pulley angle amounts to 22.0°, **in that** the contact angle (Φc-I; Φc-II) of the transverse members (32-I; 32-II) of said one population amount to 21.7°±0.2° and **in that** the contact angles (Φc-I; Φc-II) of the transverse members (32-I; 32-II) of said other one population amount to 22.3°±0.2°.

## Patentansprüche

1. Getriebe mit einer Riemenscheibe (1; 2) mit zwei Antriebsscheiben (4, 5), die gegenseitig einen Riemenscheibenwinkel (φp) definieren, und mit einem Antriebsriemen (3) mit einem ringförmigen Träger (31) und einer Anzahl von Querelementen (32), die verschiebbar und nacheinander auf dem Träger (31) angeordnet sind und jeweils mit einer vorderen Oberfläche (39) und mit einer hinteren Oberfläche (38) bereitgestellt sind, wobei sich das Querelement (32) dazwischen in Dickenrichtung erstreckt, und mit Kontaktoberflächen (37) zum Erreichen des Reibungskontakts mit den Antriebsscheiben (4, 5) der Riemenscheibe (1; 2) des Getriebes, und die gegenseitig in einem Kontaktwinkel (φc) des Antriebsriemens (3) ausgerichtet sind, wobei sich das Querelement (32) in der Breite dazwischen erstreckt, **dadurch gekennzeichnet, dass** die Kontaktwinkel (φc-I, φc-II) der Querelemente (32-I, 32-11) des Antriebsriemens (3) in zwei Gruppen aufgeteilt werden, wobei der Durchschnittswert der Kontaktwinkel (φc-I, φc-II) der Querelemente (32-1, 32-II) einer Gruppe kleiner als der Riemenscheibenwinkel (φp) ist, wobei ein Durchschnittswert der Kontaktwinkel (φc-I, φc-II) der Querelemente (32-1, 32-11) der anderen Gruppe größer als der Riemenscheibenwinkel (φp) ist, und wobei die Differenz zwischen solchen Durchschnittswerten des Kontaktwinkels (φc-I, φc-II) der Querelemente (32-1; 32-11) der zugehörigen Gruppen gleich oder größer als eine Differenz zwischen den Kontaktwinkeln (φc-I, φc-II) aller möglichen Paare von Querelementen (32-1, 32-11) der zwei Gruppen getrennt ist.

2. Getriebe mit einer Riemenscheibe (1; 2) mit zwei Antriebsscheiben (4, 5), die gegenseitig einen Riemenscheibenwinkel (φp) definieren, und mit einem Antriebsriemen (3) mit einem ringförmigen Träger (31) und einer Anzahl von Querelementen (32), die verschiebbar und nacheinander auf dem Träger (31) angeordnet sind und jeweils mit einer vorderen Oberfläche (39) und mit einer hinteren Oberfläche (38) bereitgestellt sind, wobei sich das Querelement (32) dazwischen in Dickenrichtung erstreckt, und mit Kontaktoberflächen (37) zum Erreichen des Reibungskontakts mit den Antriebsscheiben (4, 5) der Riemenscheibe (1; 2) des Getriebes, und die gegenseitig in einem Kontaktwinkel (φc) des Antriebsriemens (3) ausgerichtet sind, wobei sich das Querelement (32) in der Breite dazwischen erstreckt, **dadurch gekennzeichnet, dass** die Kontaktwinkel (φc-I; φc-II) der Querelemente (32-I, 32-11) des Antriebsriemens (3) in zwei Gruppen aufgeteilt werden können, wobei ein Durchschnittswert der Kontaktwinkel (φc-I; φc-II) der Querelemente (32-1, 32-II) einer Gruppe kleiner als der Riemenscheibenwinkel (φp) ist, wobei ein Durchschnittswert der Kontaktwinkel (φc-I, φc-II) der Querelemente (32-1, 32-11) der anderen Gruppe größer als der Riemenscheibenwinkel (φp) ist, und wobei die Standardabweichung der Kontaktwinkel (φc-I, φc-II) der Querelemente (32-1, 32-11) innerhalb jeder Gruppe 0,07 oder weniger beträgt.

3. Getriebe nach Anspruch 1 oder 2, **dadurch gekennzeichnet, dass** der Durchschnittswert der Kontaktwinkel (φc-I; φc-II) der Querelemente (32-1, 32-II) der einen Gruppe mindestens 0,2 Grad kleiner als der Riemenscheibenwinkel (φp) ist und dadurch, dass der Durchschnittswert der Kontaktwinkel (φc-I, φc-II) der Querelemente (32-1; 32-11) der anderen Gruppe 0,2 Grad größer als der Riemenscheibenwinkel (φp) ist.

4. Getriebe nach Anspruch 1, 2 oder 3, **dadurch gekennzeichnet, dass** der Riemenscheibenwinkel 22,0° beträgt, dadurch, dass der Kontaktwinkel (φc-I; φc-II) der Querelemente (32-1, 32-11) der einen Gruppe 21,7° ± 0,2° beträgt, und dadurch, dass die Kontaktwinkel (φc-I; φc-II) der Querelemente (32-1, 32-11) der anderen Gruppe 22,3° ± 0,2° betragen.

## Revendications

1. Transmission comprenant une poulie (1; 2) présentant deux réas de poulie (4, 5) qui définissent mutuellement un angle de poulie (Φp) et comprenant une courroie d'entraînement (3) présentant un support de forme annulaire (31) et un certain nombre d'éléments transversaux (32) qui sont agencés de façon coulissante et consécutive sur le support (31) et qui sont chacun pourvus d'une surface avant (39) et d'une surface arrière (38) entre lesquelles l'élément transversal (32) s'étend dans le sens de l'épaisseur, et de surfaces de contact (37) pour arriver en contact de frottement avec les réas de poulie (4, 5) de la poulie (1; 2) de la transmission et qui sont mutuellement orientées à un angle de contact (Φc) de la courroie d'entraînement (3) et entre lesquelles l'élément transversal (32) s'étend dans le sens de la largeur, **caractérisée en ce que** les angles de contact (Φc-I, Φc-II) des éléments transversaux (32-1, 32-11) de la courroie d'entraînement (3) peuvent être groupés en deux populations, dans laquelle une valeur moyenne des angles de contact (Φc-I; Φc-II) des éléments transversaux (32-1; 32-11) d'une première population est plus petite que l'angle de poulie (Φp), dans laquelle une valeur moyenne des angles de contact (Φc-I; Φc-II) des éléments transversaux (32-1; 32-11) de l'autre population est plus grande que l'angle de poulie (Φp), et dans laquelle la différence entre ces valeurs moyennes de l'angle de contact (Φc-I; Φc-II) des éléments transversaux (32-1; 32-11) des populations respectives est égale ou supérieure à une différence entre les angles de contact (Φc-I; Φc-II) de toutes les paires possibles de deux éléments transversaux (32-1; 32-11) desdites deux populations séparément.

2. Transmission comprenant une poulie (1; 2) présentant deux réas de poulie (4, 5) qui définissent mutuellement un angle de poulie (Φp) et comprenant une courroie d'entraînement (3) présentant un support de forme annulaire (31) et un certain nombre d'éléments transversaux (32) qui sont agencés de façon coulissante et consécutive sur le support (31) et qui sont chacun pourvus d'une surface avant (39) et d'une surface arrière (38) entre lesquelles l'élément transversal (32) s'étend dans le sens de l'épaisseur, et de surfaces de contact (37) pour arriver en contact de frottement avec les réas de poulie (4, 5) de la poulie (1; 2) de la transmission et qui sont mutuellement orientées à un angle de contact (Φc) de la courroie d'entraînement (3) et entre lesquelles l'élément transversal (32) s'étend dans le sens de la largeur, **caractérisée en ce que** les angles de contact (Φc-I, Φc-II) des éléments transversaux (32-1, 32-11) de la courroie d'entraînement (3) peuvent être groupés en deux populations, dans laquelle une valeur moyenne des angles de contact (Φc-I; Φc-II) des éléments transversaux (32-1; 32-11) d'une première population est plus petite que l'angle de poulie (Φp), dans laquelle une valeur moyenne des angles de contact (Φc-I; Φc-II) des éléments transversaux (32-1; 32-11) de l'autre population est plus grande que l'angle de poulie (Φp), et dans laquelle l'écart-type des angles de contact (Φc-I; Φc-II) des éléments transversaux (32-I; 32-11) à l'intérieur de chaque population est égal à 0,07, ou moins.

3. Transmission selon la revendication 1 ou 2, **caractérisée en ce que** la valeur moyenne des angles de contact (Φc-I; Φc-II) des éléments transversaux (32-1; 32-11) de ladite première population est d'au moins 0,2° inférieure à l'angle de poulie (Φp), et **en ce que** la valeur moyenne des angles de contact (Φc-I; Φc-II) des éléments transversaux (32-1; 32-11) de ladite autre population est 0,2° supérieure à l'angle de poulie (Φp).

4. Transmission selon la revendication 1, 2 ou 3, **caractérisée en ce que** l'angle de poulie est égal à 22,0°, **en ce que** l'angle de contact (Φc-I; Φc-II) des éléments transversaux (32-1; 32-11) de ladite première population est égal à 21,7° ± 0,2°, et **en ce que** les angles de contact (Φc-I; Φc-II) des éléments transversaux (32-1; 32-11) de ladite autre population sont égaux à 22,3° ± 0,2°.
